(19) Europäisches Patentamt / European Patent Office / Office européen des brevets

(11) **EP 4 723 203 A1**

(12) **EUROPEAN PATENT APPLICATION**
published in accordance with Art. 153(4) EPC

(43) Date of publication:
08.04.2026 Bulletin 2026/15

(21) Application number: 24815428.8

(22) Date of filing: 27.05.2024

(51) International Patent Classification (IPC):
$H01M\ 4/134^{(2010.01)}$     $H01M\ 4/13^{(2010.01)}$
$H01M\ 4/38^{(2006.01)}$      $H01M\ 4/48^{(2010.01)}$
$H01M\ 4/62^{(2006.01)}$      $H01M\ 10/0587^{(2010.01)}$
$H01M\ 50/107^{(2021.01)}$

(52) Cooperative Patent Classification (CPC):
Y02E 60/10; Y02P 70/50

(86) International application number:
PCT/JP2024/019325

(87) International publication number:
WO 2024/247945 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023089359

(71) Applicant: Panasonic Intellectual Property
Management Co., Ltd.
Kadoma-shi, Osaka 571-0057 (JP)

(72) Inventors:
• KANEKO, Sachiyo
kadoma-shi, Osaka 571-0057 (JP)
• TASHITA, Takamitsu
kadoma-shi, Osaka 571-0057 (JP)
• KATOGI, Akihiro
kadoma-shi, Osaka 571-0057 (JP)
• FUJISHIGE, Junichi
kadoma-shi, Osaka 571-0057 (JP)

(74) Representative: Novagraaf International SA
Chemin de l'Echo 3
1213 Onex, Geneva (CH)

(54) **NON-AQUEOUS ELECTROLYTE SECONDARY BATTERY**

(57)     A nonaqueous electrolyte secondary battery (10) comprises a wound-type electrode body (14) and a non-aqueous electrolyte. A negative electrode (12) has: a negative electrode current collector (30); a first negative electrode active material layer (31) provided on a first surface of the negative electrode current collector (30) facing the inner side of the electrode body (14); and a second negative electrode active material layer (32) provided on a second surface of the negative electrode current collector (30) facing the outer side of the electrode body (14). Each of the negative electrode active material layers has a density of 1.3 g/cm$^3$ or more, and contains silicon or a silicon-containing material, and carboxymethyl cellulose or a salt thereof. The first etherification degree (DS1) of carboxymethyl cellulose or a salt thereof contained in the first negative electrode active material layer (31) is greater than the second etherification degree (DS2) of carboxymethyl cellulose or a salt thereof contained in the second negative electrode active material layer (32).

Figure 2

EP 4 723 203 A1

**Description**

TECHNICAL FIELD

The present disclosure relates to a non-aqueous electrolyte secondary battery, and more specifically relates to a non-aqueous electrolyte secondary battery comprising a wound electrode assembly.

BACKGROUND ART

Conventionally, non-aqueous electrolyte secondary batteries comprising a wound electrode assembly in which a positive electrode and a negative electrode are wound via a separator have been widely known. An electrode typically has an active material layer provided on both surfaces of a current collector. In the wound electrode assembly, a first active material layer facing an inner side of the electrode assembly and a second active material layer facing an outer side of the electrode assembly have different degrees of curvature, and thus a non-aqueous electrolyte secondary battery having different layer structure in each of the active material layers has been proposed. For example, Patent Literature 1 discloses a non-aqueous electrolyte secondary battery comprising a negative electrode having different concentration distribution of a binder in first and second active material layers.

CITATION LIST

PATENT LITERATURE

PATENT LITERATURE 1: International Publication No. WO2019/230296

SUMMARY

As a means for increasing a capacity of a battery, proposed are using a silicon-containing material having a high theoretical capacity density for a negative electrode active material, increasing a filling density of the negative electrode active material, and the like. However, the battery in which these means are applied tends to largely decrease the capacity in a quick-charging cycle. As a result of investigation by the present inventors, decrease in a capacity during the quick-charging cycle has been observed in a non-aqueous electrolyte secondary battery comprising a wound electrode assembly and having a high capacity. The conventional art including Patent Literature 1 still has room for improvement in achievement of both a high capacity and good quick-charging cycle characteristics.

A non-aqueous electrolyte secondary battery according to the present disclosure is a non-aqueous electrolyte secondary battery comprising: a wound electrode assembly in which a positive electrode and a negative electrode are wound via a separator; and a non-aqueous electrolyte, wherein: the negative electrode has a negative electrode current collector, a first negative electrode active material layer provided on a first surface of the negative electrode current collector facing an inner side of the electrode assembly, and a second negative electrode active material layer provided on a second surface of the negative electrode current collector facing an outer side of the negative electrode assembly; the first and second negative electrode active material layers have a density of greater than or equal to 1.3 g/cm$^3$, and include silicon or a silicon-containing material and carboxymethylcellulose or a salt thereof; and a first degree of etherification (DS1) of the carboxymethylcellulose or a salt thereof included in the first negative electrode active material layer is larger than a second degree of etherification (DS2) of the carboxymethylcellulose or a salt thereof included in the second negative electrode active material layer.

The non-aqueous electrolyte secondary battery according to the present disclosure may increase a capacity retention in a quick-charging cycle, and may achieve both the high capacity and the good quick-charging cycle characteristics, for example.

BRIEF DESCRIPTION OF DRAWING

FIG. 1 is a sectional view of a non-aqueous electrolyte secondary battery of an example of an embodiment.
FIG. 2 is a sectional view of a negative electrode of an example of an embodiment.

DESCRIPTION OF EMBODIMENTS

As noted above, it is an important challenge to increase the capacity retention in the quick-charging cycle while increasing the capacity of the battery. In particular, a battery on board is strongly required to have the high capacity and small decrease in the capacity during repetition of quick charge, namely excellent quick-charging cycle characteristics. As a result of investigation by the present inventors, it has been found that a case where a density of a negative electrode active material layer is high and silicon or a silicon-containing material is used as the negative electrode active material generates a difference in permeability of an electrolyte liquid between a first negative electrode active material layer facing an inner side of an electrode assembly and a second negative electrode active material layer facing an outer side of the electrode assembly. It is considered that this is due to increase in a bending stress of the first negative electrode active material layer, leading to deteriorated permeability of the electrolyte liquid. When uniform permeation of the electrolyte liquid is inhibited, it is presumed that deterioration in the negative electrode tends to proceed to largely decrease the capacity with charge and discharge.

The present inventors have intensively investigated the above problem, and consequently found that excellent quick-charging cycle characteristics can be obtained by setting a first degree of etherification (DS1) of carboxymethylcellulose or a salt thereof included in a first negative electrode active material layer to be larger than a second degree of etherification (DS2) of carboxymethylcellulose or a salt thereof included in a second negative electrode active material layer (DS1 > DS2). Applying this configuration is considered to effectively improve impregnation in the negative electrode, and the permeability of the electrolyte liquid in the negative electrode active material layers may be uniformized. As a result, improvement of quick-charging cycle characteristics significantly exceeding expectations may be achieved.

Note that the effect of improving the quick-charging cycle characteristics by DS1 > DS2 is specifically exhibited when a high-capacity negative electrode including silicon or a silicon-containing material as the negative electrode active material and having a density of the negative electrode active material layer of greater than or equal to 1.3 g/cc is used.

Hereinafter, an example of an embodiment of the non-aqueous electrolyte secondary battery according to the present disclosure will be described in detail with reference to the drawings. The scope of the present disclosure includes constitutions composed of selective combinations of constitutional elements of a plurality of embodiments and modified examples described below.

Hereinafter, a cylindrical battery in which a wound electrode assembly 14 is housed in a bottomed cylindrical exterior housing can 16 will be exemplified as a non-aqueous electrolyte secondary battery, but the exterior body of the battery is not limited to the cylindrical exterior housing can. The non-aqueous electrolyte secondary battery according to the present disclosure may be any battery comprising the wound electrode assembly, and may be, for example, a rectangular battery comprising a rectangular exterior housing can or a laminate battery comprising an exterior body constituted with laminated sheets including a metal layer and a resin layer. Note that the configuration of the present disclosure is particularly suitable in a cylindrical battery having a large portion where there is a difference electrode plate density between a first negative electrode active material layer facing an inner side of the electrode assembly and a second negative electrode active material layer facing an outer side of the electrode assembly.

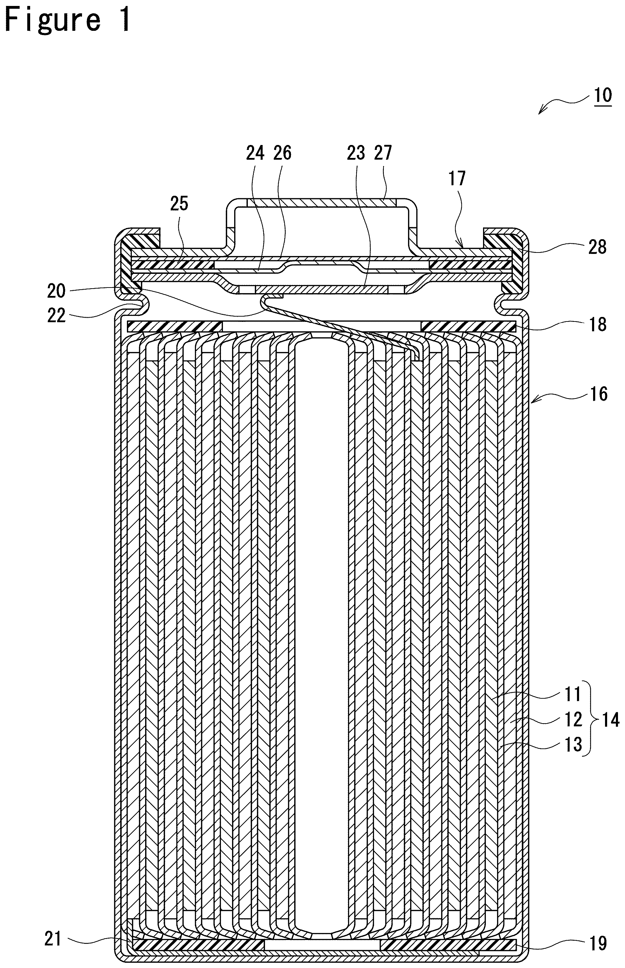

FIG. 1 is a sectional view of a non-aqueous electrolyte secondary battery 10 of an example of an embodiment. As illustrated in FIG. 1, the non-aqueous electrolyte secondary battery 10 is a cylindrical battery comprising the electrode assembly 14, a non-aqueous electrolyte, the bottomed cylindrical exterior housing can 16 housing the electrode assembly 14 and the non-aqueous electrolyte, and a sealing assembly 17 sealing an opening portion of the exterior housing can 16. The electrode assembly 14 includes a positive electrode 11, a negative electrode 12, and a separator 13, and has a wound structure in which the positive electrode 11 and the negative electrode 12 are spirally wound via the separator 13. The exterior housing can 16 has a grooved portion 22 formed on a side wall, and the sealing assembly 17 is supported by the grooved portion 22 to seal the opening portion of the exterior housing can 16. Hereinafter, for convenience of description, the sealing assembly 17 side of the non-aqueous electrolyte secondary battery 10 will be described as the upper side, and the can bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted product in which hydrogen of these solvents is at least partially replaced with a halogen atom such as fluorine (for example, fluoroethylene carbonate or the like). For the electrolyte salt, a lithium salt such as $LiPF_6$ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

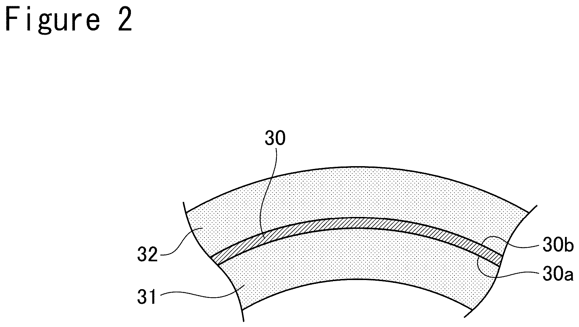

On the outer peripheral surface of the electrode assembly 14, the negative electrode 12 is disposed, and an exposed portion where a surface of a negative electrode current collector 30 constituting the negative electrode 12 (see FIG. 2, described later) is exposed may be provided. In this case, this exposed portion may be contacted with the inner peripheral surface of the exterior housing can 16 to electrically connect the negative electrode 12 and the exterior housing can 16.

A gasket 28 is provided between the exterior housing can 16 and the sealing assembly 17 to achieve sealability inside the battery and to prevent electric contact between the exterior housing can 16 and the sealing assembly 17. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 crimping the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13 that constitute the electrode assembly 14, specifically the negative electrode 12, will be described in detail.

[Positive Electrode]

The positive electrode 11 has a positive electrode current collector and a positive electrode active material layer provided on the positive electrode current collector. For the positive electrode current collector, a foil of a metal stable within a potential range of the positive electrode 11, such as aluminum, an aluminum alloy, stainless steel, and titanium, a film in which such a metal is disposed on a surface layer thereof, and the like may be used. The positive electrode active material layer includes a positive electrode active material, a conductive agent, and a binder, and is preferably provided on both surfaces of the positive electrode current collector except for a portion where the positive electrode lead 21 is to be connected. Between the positive electrode current collector and the positive electrode active material layer or on the positive electrode active material layer, a protective layer including inorganic particles and a binder may be provided. The positive electrode 11 may be produced by, for example, applying a positive electrode mixture slurry including the positive electrode active material, the conductive agent, and the binder on the positive electrode current collector, and drying and subsequently compressing the coating film to form the positive electrode active material layer on both the surfaces of the positive electrode current collector.

For the positive electrode active material, a lithium-transition metal composite oxide containing a transition metal element such as Ni, Co, and Mn is used. Examples of the metal element contained in the lithium-transition metal composite oxide include Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. Among these, at least one of Ni, Co, and Mn is preferably contained. An example of the preferable composite oxide includes: a lithium-transition metal composite oxide containing Ni, Co, and Mn; and a lithium-transition metal composite oxide containing Ni, Co, and Al. The lithium-transition metal composite oxide may be used singly, or a plurality of types thereof may be used in combination.

The lithium-transition metal composite oxide has, for example, a layered rock-salt structure. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. A density of the positive electrode active material layer is preferably greater than or equal to 3.3 g/cm$^3$ from the viewpoint of increase in the capacity. An example of an upper limit of the density of the positive electrode active material layer is 3.8 g/cm$^3$.

Examples of the conductive agent included in the positive electrode active material layer may include carbon black such as acetylene black and Ketjenblack, graphite, carbon nanotube (CNT), carbon nanofiber, graphene, metal fiber, metal powder, and conductive whisker. The conductive agent may be used singly, or a plurality of types thereof may be used in combination.

Examples of the binder included in the positive electrode active material layer may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like. The binder may be used singly, or a plurality of types thereof may be used in combination.

[Negative Electrode]

FIG. 2 is a sectional view of the negative electrode 12 constituting the wound electrode assembly 14. As illustrated in FIG. 2, the negative electrode 12 has a negative electrode current collector 30 and a negative electrode active material layer provided on each of both surfaces of the negative electrode current collector 30. Although detail will be described later, the negative electrode 12 has different degrees of etherification of carboxymethylcellulose (CMC) or a salt thereof included in each of a first negative electrode active material layer 31 provided on a first surface 30a of the negative electrode current collector 30 facing an inner side of the electrode assembly 14, and a second negative electrode active material layer 32 provided on a second surface 30b of the negative electrode current collector 30 facing an outer side of the negative electrode current collector 30. This configuration may inhibit generation of a difference in permeability of the electrolyte liquid into each of the negative electrode active material layers to remarkably improve the capacity retention in the quick-charging cycle.

For the negative electrode current collector 30, a foil of a metal stable within a potential range of the negative electrode 12, such as copper, a copper alloy, stainless steel, nickel, and a nickel alloy, a film in which such a metal is disposed on a surface thereof, and the like may be used. The first negative electrode active material layer 31 and the second negative electrode active material layer 32 include a negative electrode active material and a binder, and are provided on, for example, the entirety of the negative electrode current collector 30 except for a portion where the negative electrode lead 21 is to be connected. Between the negative electrode current collector 30 and the negative electrode active material layer or on the negative electrode active material layer, a protective layer including inorganic particles and a binder may be provided.

The negative electrode 12 may be produced by, for example, applying a negative electrode mixture slurry including the negative electrode active material and the binder on the surfaces of the negative electrode current collector 30, and drying and subsequently compressing the coating film to form the negative electrode active material layer on both the surfaces of the negative electrode current collector 30. In this time, each of first and second negative electrode mixture slurries including CMC or a salt thereof having a degree of etherification different from each other is applied on each of the surfaces of the negative electrode current collector 30. On the first surface 30a to be an inner winding side surface of the negative electrode current collector 30, the first negative electrode mixture slurry including CMC or a salt thereof having a high degree of etherification is applied. On the first surface 30b to be an outer winding side surface of the negative electrode current collector 30, the second negative electrode mixture slurry including CMC or a salt thereof having a low degree of etherification is applied.

The negative electrode 12 includes at least silicon (Si) or a Si-containing material as the negative electrode active material. Among these, the Si-containing material is preferable. Although only the Si-containing material may be used as the negative electrode active material, a carbon material that reversibly occludes and releases lithium ions is preferably used in combination from the viewpoint of improvement of the cycle characteristics. Note that the negative electrode active material layer may include a conductive agent such as CNT. For the conductive agent, the conductive agent same as in the case of the positive electrode 11 may be used.

The carbon material that functions as the negative electrode active material is, for example, at least one selected from the group consisting of natural graphite, artificial graphite, soft carbon, and hard carbon. Among these, graphite is preferably used as the carbon material. The graphite may be artificial graphite such as massive artificial graphite (MAG) and graphitized mesophase-carbon microbead (MCMB), natural graphite such as flake graphite, massive graphite, and amorphous graphite, or a mixture thereof.

A volume-based D50 of the graphite is, for example, greater than or equal to 1 μm and less than or equal to 30 μm, and preferably greater than or equal to 5 μm and less than or equal to 25 μm. The D50 of the negative electrode active material particles means a particle diameter at which a cumulative frequency is 50% from a smaller particle diameter side in volume-based particle size distribution. The particle size distribution of the lithium-transition metal composite oxide may be measured by using a laser diffraction-type particle size distribution measuring device (for example, MT3000II, manufactured by MicrotracBEL Corp.) with water as a dispersion medium.

The Si-containing material that functions as the negative electrode active material may be any material containing Si, and an example thereof includes a silicon alloy, a silicon compound, and a composite material containing Si. Among these, the composite material containing Si is preferable. A D50 of the Si-containing material is typically smaller than the D50 of the graphite. The volume-based D50 of the Si-containing material is, for example, greater than or equal to 1 $\mu$m and less than or equal to 20 $\mu$m, or greater than or equal to 1 $\mu$m and less than or equal to 15 $\mu$m.

The preferable Si-containing material (composite material) is of composite particles including an ion-conductive phase, and Si phases dispersed in the ion-conductive phase. An example of the preferable ion-conductive phase is at least one selected from the group consisting of a silicate phase, a carbon phase, a silicide phase, and a silicon oxide phase. The silicide phase is a phase of a compound composed of Si and an element more electrically positive than Si, and an example thereof includes $NiSi$, $Mg_2Si$, and $TiSi_2$. The Si phase is formed by Si dispersed as fine particles. The ion-conductive phase is a continuous phase constituted by aggregation of particles finer than the Si phase.

The composite material may have a conductive layer covering a surface of the ion-conductive phase. The conductive layer is constituted with a material having higher conductivity than the ion-conductive layer, and forms a good conductive path in the negative electrode active material layer. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used.

An example of the preferable composite material containing Si is of composite particles that have a sea-island structure in which fine Si is substantially uniformly dispersed in an amorphous silicon oxide phase, and that is represented entirely by the general formula $SiO_x$ (0 < x $\leq$ 2). The main component of silicon oxide may be silicon dioxide. The silicon oxide phase may be doped with Li. A content ratio (x) of oxygen to Si is, for example, $0.5 \leq x < 2.0$, and preferably $0.8 \leq x \leq 1.5$.

Another example of the preferable composite material containing Si includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula $Li_{2z}SiO_{(2+z)}$ (0 < z < 2). The lithium silicate phase preferably does not include $Li_4SiO_4$ (Z=2). $Li_4SiO_4$, which is an unstable compound, reacts with water and exhibits alkalinity, and therefore may modify Si, resulting in deterioration of the charge-discharge capacity. The lithium silicate phase preferably contains $Li_2SiO_3$ (Z=1) or $Li_2Si_2O_5$ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The composite material may include particles in which the ion-conductive phase is an amorphous carbon phase. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

The first negative electrode active material layer 31 and the second negative electrode active material layer 32 have a density of greater than or equal to 1.3 g/cm$^3$, and include CMC or a salt thereof. As noted above, each of the negative electrode active material layers preferably includes the graphite and the Si-containing material as the negative electrode active material particles. A content of the graphite is, for example, greater than or equal to 80 mass% and less than or equal to 99 mass%, greater than or equal to 85 mass% and less than or equal to 98 mass%, or greater than or equal to 90 mass% and less than or equal to 97 mass% based on the total mass of the negative electrode active material. A content of the Si-containing material is, for example, greater than or equal to 1 mass% and less than or equal to 20 mass%, greater than or equal to 2 mass% and less than or equal to 15 mass%, or greater than or equal to 3 mass% and less than or equal to 10 mass% based on the total mass of the negative electrode active material.

CMC or a salt thereof included in the first negative electrode active material layer 31 and the second negative electrode active material layer 32 functions as the binder and also functions as a thickener to impart appropriate viscosity to the negative electrode mixture slurry. In addition, each of the negative electrode active material layers preferably includes a binder other than CMC or a salt thereof. Each of the negative electrode active material layers may include the same binder as in the case of the positive electrode 11 as the binder, and preferably includes styrene-butadiene rubber (SBR).

A content of the negative electrode active material is, for example, greater than or equal to 90 mass% and less than or equal to 99.5 mass%, or greater than or equal to 95 mass% and less than or equal to 99 mass% relative to the mass of the negative electrode active material layer. A content of CMC or a salt thereof is, for example, greater than or equal to 0.1 mass% and less than or equal to 2.5 mass%, or greater than or equal to 0.5 mass% and less than or equal to 1.5 mass% relative to the mass of the negative electrode active material layer. In this case, both the high capacity and the good cycle characteristics are easily achieved.

A thickness of the negative electrode active material layer is determined by observation of a cross section of the active material layer using a scanning electron microscope (SEM). Although the thickness of the negative electrode active material layer is substantially constant, the thickness means an average value of the thickness unless otherwise mentioned herein. The thicknesses of the first negative electrode active material layer 31 and the second negative electrode active material layer 32 may be different from each other, but are preferably approximately the same from the viewpoint of achievement of both the high capacity and the good cycle characteristics.

Densities of the first negative electrode active material layer 31 and the second negative electrode active material layer 32 are preferably greater than or equal to 1.3 $g/cm^3$, and more preferably greater than or equal to 1.4 $g/cm^3$ from the viewpoint of increase in the capacity. An upper limit of the densities is, for example, 2.0 $g/cm^3$, and preferably 1.8 $g/cm^3$. From the viewpoint of achievement of both the high capacity and the good cycle characteristics, an example of a preferable range of the density of each of the negative electrode active material layers is greater than or equal to 1.3 $g/cm^3$ and less than or equal to 1.8 $g/cm^3$. Reducing the density of the negative electrode active material layer improves the impregnation to improve the quick-charging cycle characteristics, but the capacity considerably decreases in this case. According to the negative electrode 12, excellent quick-charging cycle characteristics can be achieved without largely reducing the density.

[Method for Calculating Density of Negative Electrode Active Material Layer]

From the sectional SEM image of the negative electrode active material layer, each of the thicknesses of the first negative electrode active material layer 31 and the second negative electrode active material layer 32 is measured, and a mass of the negative electrode active material layer per unit area is determined to calculate the density (mass of the negative electrode active material layer per unit area × 100 / (unit area + thickness of the negative electrode active material layer)).

As noted above, CMC or a salt thereof included in the first negative electrode active material layer 31 and the second negative electrode active material layer 32 has degrees of etherification (DS1, DS2) different from each other, which satisfy the requirement of DS1 > DS2. In this case, generation of a difference in permeability of the electrolyte liquid into the first negative electrode active material layer 31 and the second negative electrode active material layer 32 is inhibited, and the capacity retention in the quick-charging cycle may be remarkably improved. CMC is a water-soluble polymer in which hydroxyl groups in a cellulose skeleton are partially replaced by a carboxymethyl group. A degree of substitution with the carboxymethyl group is represented by the degree of etherification.

The difference (DS1-DS2) between the degree of etherification (DS1) of CMC or a salt thereof included in the first negative electrode active material layer 31 and the degree of etherification (DS2) of CMC or a salt thereof included in the second negative electrode active material layer 32 is preferably greater than or equal to 0.3, and more preferably greater than or equal to 0.4. In this case, the effect of improving the quick-charging cycle characteristics becomes remarkable. An upper limit of DS1-DS2 is not particularly limited, but preferably 1.0, more preferably 0.9, and particularly preferably 0.8.

The degrees of etherification (DS1, DS2) are preferably greater than or equal to 0.5, and more preferably greater than or equal to 0.6. In this case, the quick-charging cycle characteristics may be more effectively improved. An example of the preferable degree of etherification (DS1) is greater than or equal to 0.7 and less than or equal to 1.8, greater than or equal to 0.8 and less than or equal to 1.5, or greater than or equal to 1.0 and less than or equal to 1.3. An example of the preferable degree of etherification (DS2) is greater than or equal to 0.4 and less than or equal to 0.7, or greater than or equal to 0.5 and less than or equal to 0.7. Excessively high degrees of etherification (DS1, DS2) are considered to decrease an adhesive force of the negative electrode active material layer to the negative electrode current collector 30, which may improve the permeability of the electrolyte liquid but fail to yield the effect of improving the cycle characteristics.

The first negative electrode active material layer 31 and the second negative electrode active material layer 32 preferably include a salt in which the carboxyl groups in CMC are neutralized. Examples of the salt of CMC include a sodium salt, an ammonium salt, a lithium salt, a potassium salt, a rubidium salt, and a cesium salt, and the salt is preferably a sodium salt (CMC-Na). CMC-Na is typically a partially neutralized salt in which the carboxyl groups are partially neutralized. A weight-average molecular weight of CMC-Na is, for example, greater than or equal to 200 thousands and less than or equal to 1 million, and preferably greater than or equal to 200 thousands and less than or equal to 500 thousands.

When the density of the negative electrode active material layer is increased for a purpose of increasing the capacity, the electrolyte liquid becomes less permeable through the first negative electrode active material layer 31 provided on the inner winding side of the negative electrode current collector 30 compared with the second negative electrode active material layer 32 provided on the outer winding side of the negative electrode current collector 30. In the negative electrode 12, the liquid permeability in the negative electrode active material layers is uniformized to achieve both the high capacity and the excellent quick-charging cycle characteristics by setting DS1 > DS2. Note that the effect by the configuration of DS1 > DS2 is specifically exhibited when the density of the negative electrode active material layer is 1.3 $g/cm^3$.

[Method for Measuring Degree of Etherification]

About 1 g of a sample is weighed in a flask, and an appropriate amount of pure water is added to dissolve the sample. Into this, about 5 mL of a 0.05 M (N/10) sulfuric acid aqueous solution is added with a pipette, the mixture is boiled for several minutes and cooled, and then a phenolphthalein indicator is added to titrate the sample with a 0.1 M (N/10) sodium hydroxide aqueous solution. An alkalinity is calculated by the following formula.

Alkalinity = $5 \times F'$ - 0.1 M (N/10) Sodium hydroxide aqueous solution, mL $\times$ F / Sample (in terms of anhydride, g)

F: Factor of the 0.1 M (N/10) sodium hydroxide aqueous solution
F': Factor of the 0.05 M (N/10) sulfuric acid aqueous solution

About 1 g of the sample is weighed, put in a crucible, and calcined at greater than or equal to 500°C. After cooling, the sample together with the crucible is transferred to a beaker, an appropriate amount of pure water is added, then 50 mL of a 0.05 M (N/10) sulfuric acid aqueous solution is exactly added, and the mixture is boiled for several tens of minutes. After cooling, a phenolphthalein indicator is added to titrate the sample with a 0.1 M (N/10) sodium hydroxide aqueous solution.
By this method, a blank test titration is similarly performed. The degree of etherification is calculated by the following formula.

A = (Blank test titration, mL - Sample titration, mL) $\times$ F / Sample (in terms of anhudride, g) - Alkalinity F: Factor of the 0.1 M (N/10) sodium hydroxide aqueous solution
The above A means a number of mL of the 0.05 M (N/10) sulfuric acid aqueous solution consumed to neutralize bonding sodium in 1 g of the sample. The following degree of etherification is calculated by using the above A.

$$\text{Degree of etherification (DS)} = 162A / (10000 - 80A)$$

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE) / polypropylene (PP); or a three-layer structure of PE/PP/PE. On a surface of the separator 13, a filler layer including an inorganic filler or a highly heat-resistant resin layer such as an aramid resin may be provided.

EXAMPLES

Hereinafter, the present disclosure will be further described with Examples, but the present disclosure is not limited to these Examples.

<Example 1>

[Production of Positive Electrode]

As a positive electrode active material, aluminum-containing lithium nickel cobaltate ($LiNi_{0.88}Co_{0.09}Al_{0.03}O_2$) was used. The positive electrode active material, graphite, and polyvinylidene fluoride were mixed at a solid-content mass ratio of 100:1:0.9, and N-methyl-2-pyrrolidone (NMP) was used as a dispersion medium to prepare a positive electrode mixture slurry. Then, the positive electrode mixture slurry was applied on both surfaces of a positive electrode current collector composed of aluminum foil (thickness: 15 $\mu$m) by a doctor blade method, and the coating film was dried and compressed by using a roller. Thereafter, the positive electrode current collector was cut to a predetermined electrode size to obtain a positive electrode in which a positive electrode active material layer was formed on both the surfaces of the positive electrode current collector.

[Preparation of Negative Electrode Mixture Slurry A]

As a negative electrode active material, a mixture in which graphite and a Si-containing material represented by $SiO_x$ (X = 1) were mixed at a mass ratio of 95:5 was used. The negative electrode active material, a dispersion of styrene-butadiene rubber (SBR), and a sodium salt of carboxymethylcellulose (CMC-Na) having a degree of etherification of 1.3 were mixed at a solid-content mass ratio of 100:1:1, and water was used as a dispersion medium to prepare a negative electrode mixture slurry A.

[Preparation of Negative Electrode Mixture Slurry B]

As a negative electrode active material, a mixture in which graphite and a Si-containing material represented by $SiO_x$ (X = 1) were mixed at a mass ratio of 95:5 was used. The negative electrode active material, a dispersion of styrene-butadiene rubber (SBR), and CMC-Na having a degree of etherification of 0.6 were mixed at a solid-content mass ratio of 100:1:1, and water was used as a dispersion medium to prepare a negative electrode mixture slurry B.

[Production of Negative Electrode]

By a doctor blade method, the negative electrode mixture slurry A was applied on a first surface of a negative electrode current collector composed of copper foil, the negative electrode mixture slurry B was applied on a second surface of the negative electrode current collector, and each of the coating films was dried. In this time, the amounts of the negative electrode mixture slurries applied per unit area were set to be equal. Thereafter, the coating films were compressed by using a roller, and the negative electrode current collector was cut to a predetermined electrode size to obtain a negative electrode in which each of a first negative electrode active material layer composed of the negative electrode mixture slurry A and a second negative electrode active material layer composed of the negative electrode mixture slurry B was formed on the negative electrode current collector. The densities of the negative electrode active material layers measured by the above method were both 1.5 $g/cm^3$.

[Preparation of Non-Aqueous Electrolyte Liquid]

Ethylene carbonate and dimethylcarbonate were mixed at a volume ratio (25°C) of 1:3, and then vinylene carbonate and $LiPF_6$ were added into this mixed solvent so that the concentrations were respectively 5 mass% and 1 mol/L to obtain a non-aqueous electrolyte liquid.

[Production of Test Cell (Non-Aqueous Electrolyte Secondary Battery)]

The above positive electrode in which a positive electrode lead was welded to the positive electrode current collector and the above negative electrode in which a negative electrode lead was welded to the negative electrode current collector were spirally wound via a separator to produce a wound electrode assembly. In this time, the negative electrode was disposed so that the first negative electrode active material layer faced an inner side of the electrode assembly. Insulating plates were respectively disposed on the upper and lower sides of the electrode assembly, the negative electrode lead was welded to an inner surface of a can bottom of a bottomed cylindrical exterior housing can, the positive electrode lead was welded to a sealing assembly, and the electrode assembly was housed in the exterior housing can. The above non-aqueous electrolyte liquid was injected into the exterior housing can by a pressure-reducing method, and then an opening portion of the exterior housing can was sealed with the sealing assembly via a gasket to obtain a test cell.

<Example 2>

A negative electrode and a test cell were produced in the same manner as in Example 1 except that a negative electrode mixture slurry C including CMC-Na having a degree of etherification of 1.0 was used instead of the negative electrode mixture slurry A.

<Example 3>

A negative electrode and a test cell were produced in the same manner as in Example 1 except that: a negative electrode mixture slurry D including CMC-Na having a degree of etherification of 1.0 was used instead of the negative electrode mixture slurry A; and a negative electrode mixture slurry E including CMC-Na having a degree of etherification of 0.5 was used instead of the negative electrode mixture slurry B.

<Comparative Example 1>

A negative electrode and a test cell were produced in the same manner as in Example 2 except that the negative electrode active material layer on both the surfaces of the negative electrode current collector was formed by using only the negative electrode mixture slurry C.

<Comparative Example 2>

A negative electrode and a test cell were produced in the same manner as in Example 1 except that the negative electrode active material layer on both the surfaces of the negative electrode current collector was formed by using only the negative electrode mixture slurry B.

<Reference Example 1>

A negative electrode and a test cell were produced in the same manner as in Example 1 except that, in the production of the negative electrode, the density of each of the negative electrode active material layers was changed to 1.2 g/cm$^3$.

<Reference Example 2>

A negative electrode and a test cell were produced in the same manner as in Comparative Example 2 except that, in the production of the negative electrode, the density of each of the negative electrode active material layers was changed to 1.2 g/cm$^3$.

Each of the test cells of Examples, Comparative Examples, and Reference Examples was subjected to performance evaluation by the following method. Table 1 and Table 2 show the evaluation results together with the degree of etherification of CMC-Na included in the negative electrode active material layers. The capacity retentions shown in Table 1 are values relative to the capacity retention of Example 1 being 100, and a higher value thereof means more excellent quick-charging cycle characteristics. The capacity retentions shown in Table 2 are values relative to the capacity retention of Reference Example 1 being 100.

[Evaluation of Quick-Charging Cycle Characteristics (Capacity Retention)]

Under a temperature environment at 25°C, each of the test cells of Examples, Comparative Examples, and Reference Examples was charged at a constant current of 1 C (4600 mA) until a cell voltage reached 4.2 V, and then charged at a constant voltage of 4.2 V until C/50. Thereafter, the test cell was discharged at a constant current of 0.5 C until the cell voltage reached 2.5 V. This charge and discharge was repeated with 100 cycles, and the capacity retention was determined by the following formula.

Capacity retention = (Discharge capacity at 100$^{th}$ cycle / Discharge capacity at 1$^{st}$ cycle) $\times$ 100

[Table 1]

| | DS of CMC-Na in first active material layer | DS of CMC-Na in second active material layer | Capacity retention |
|---|---|---|---|
| Example 1 | 1.3 | 0.6 | 100 |
| Example 2 | 1.0 | 0.6 | 100 |
| Example 3 | 0.7 | 0.5 | 94 |
| Comparative Example 1 | 1.0 | 1.0 | 93 |
| Comparative Example 2 | 0.6 | 0.6 | 90 |

[Table 2]

|  | Density (g/cc) | DS of CMC-Na in first active material layer | DS of CMC-Na in second active material layer | Capacity retention |
|---|---|---|---|---|
| Reference Example 1 | 1.2 | 1.3 | 0.6 | 100 |
| Reference Example 2 | 1.2 | 1.0 | 0.6 | 101 |

As shown in Table 1, the test cells of Examples exhibited the high capacity retention in the quick-charging cycle compared with the test cells of Comparative Examples. It is considered that generation of a difference in permeability of the electrolyte liquid in the negative electrode active material layers was effectively inhibited by setting the degree of etherification (DS) of CMC-Na included in the first negative electrode active material layer facing the inner winding side of the electrode assembly to be higher than the DS of CMC-Na included in the second negative electrode active material layer facing the outer winding side of the electrode assembly to consequently improve the quick-charging cycle characteristics. Particularly when a difference between the DS of CMC-Na included in the first and second negative electrode active material layers was greater than or equal to 0.3 (Examples 1 and 2), the effect of improving the quick-charging cycle characteristics was remarkable.

As shown in Table 2, the negative electrode active material layer having a density of 1.2 g/cm$^3$ did not yield the effect of improving the capacity retention in the quick-charging cycle even by setting the DS of CMC-Na included in the first negative electrode active material layer > the DS of CMC-Na included in the second negative electrode active material layer. It is considered that the case where the density of the negative electrode active material layer was low had originally high permeability of the electrolyte liquid, and thus the effect affecting the cycle characteristics was not exhibited even by applying the configuration of Examples. As a result of investigation by the present inventors, it has been revealed that the above effect in Examples is specifically exhibited when the density of the negative electrode active material layer is 1.3 g/cm$^3$.

The present disclosure will be further described with the following embodiments.

Constitution 1: A non-aqueous electrolyte secondary battery, comprising: a wound electrode assembly in which a positive electrode and a negative electrode are wound via a separator; and a non-aqueous electrolyte, wherein: the negative electrode has a negative electrode current collector, a first negative electrode active material layer provided on a first surface of the negative electrode current collector facing an inner side of the electrode assembly, and a second negative electrode active material layer provided on a second surface of the negative electrode current collector facing an outer side of the negative electrode assembly; the first and second negative electrode active material layers include silicon or a silicon-containing material and carboxymethylcellulose or a salt thereof; and a first degree of etherification (DS1) of the carboxymethylcellulose or a salt thereof included in the first negative electrode active material layer is larger than a second degree of etherification (DS2) of the carboxymethylcellulose or a salt thereof included in the second negative electrode active material layer.

Constitution 2: The non-aqueous electrolyte secondary battery according to Constitution 1, wherein a difference between the first degree of etherification (DS1) and the second degree of etherification (DS2) is greater than or equal to 0.3.

Constitution 3: The non-aqueous electrolyte secondary battery according to Constitution 1 or 2, wherein densities of the first and second negative electrode active material layers are greater than or equal to 1.3 g/cm$^3$ and less than or equal to 1.8 g/cm$^3$.

Constitution 4: The non-aqueous electrolyte secondary battery according to any one of Constitutions 1 to 3, wherein a weight-average molecular weight of the carboxymethylcellulose or a salt thereof included in the first and second negative electrode active material layers is greater than or equal to 200 thousands and less than or equal to 500 thousands.

Constitution 5: The non-aqueous electrolyte secondary battery according to any one of Constitutions 1 to 4, wherein the carboxymethylcellulose salt included in the first and second negative electrode active material layers includes, as the salt, at least one of the group consisting of a sodium salt, an ammonium salt, a lithium salt, a potassium salt, a rubidium salt, and a cesium salt.

Constitution 6: The non-aqueous electrolyte secondary battery according to any one of Constitutions 1 to 5, wherein the battery is a cylindrical battery comprising a bottomed cylindrical exterior housing can.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode current collector, 30a First surface, 30b Second surface, 31 First negative electrode active material layer, 32 Second negative electrode active material layer

**Claims**

1. A non-aqueous electrolyte secondary battery, comprising:

   a wound electrode assembly in which a positive electrode and a negative electrode are wound via a separator; and
   a non-aqueous electrolyte, wherein
   the negative electrode has: a negative electrode current collector; a first negative electrode active material layer provided on a first surface of the negative electrode current collector facing an inner side of the electrode assembly; and a second negative electrode active material layer provided on a second surface of the negative electrode current collector facing an outer side of the negative electrode assembly,
   the first and second negative electrode active material layers have a density of greater than or equal to 1.3 g/cm$^3$, and include silicon or a silicon-containing material and carboxymethylcellulose or a salt thereof, and
   a first degree of etherification (DS1) of the carboxymethylcellulose or a salt thereof included in the first negative electrode active material layer is larger than a second degree of etherification (DS2) of the carboxymethylcellulose or a salt thereof included in the second negative electrode active material layer.

2. The non-aqueous electrolyte secondary battery according to claim 1, wherein a difference between the first degree of etherification (DS1) and the second degree of etherification (DS2) is greater than or equal to 0.3.

3. The non-aqueous electrolyte secondary battery according to claim 1, wherein the densities of the first and second negative electrode active material layers are less than or equal to 1.8 g/cm$^3$.

4. The non-aqueous electrolyte secondary battery according to claim 1, wherein a weight-average molecular weight of the carboxymethylcellulose or a salt thereof included in the first and second negative electrode active material layers is greater than or equal to 200 thousands and less than or equal to 500 thousands.

5. The non-aqueous electrolyte secondary battery according to claim 1, wherein the carboxymethylcellulose salt included in the first and second negative electrode active material layers includes, as the salt, at least one of the group consisting of a sodium salt, an ammonium salt, a lithium salt, a potassium salt, a rubidium salt, and a cesium salt.

6. The non-aqueous electrolyte secondary battery according to any one of claims 1 to 5, wherein the battery is a cylindrical battery comprising a bottomed cylindrical exterior housing can.

# Figure 1

# Figure 2

## INTERNATIONAL SEARCH REPORT

<table>
<tr><td></td><td>International application No.<br><br>**PCT/JP2024/019325**</td></tr>
</table>

### A. CLASSIFICATION OF SUBJECT MATTER

***H01M 4/134***(2010.01)i; ***H01M 4/13***(2010.01)i; ***H01M 4/38***(2006.01)i; ***H01M 4/48***(2010.01)i; ***H01M 4/62***(2006.01)i; ***H01M 10/0587***(2010.01)i; ***H01M 50/107***(2021.01)i
FI: H01M4/134; H01M4/13; H01M4/38 Z; H01M4/48; H01M4/62 Z; H01M50/107; H01M10/0587

According to International Patent Classification (IPC) or to both national classification and IPC

### B. FIELDS SEARCHED

Minimum documentation searched (classification system followed by classification symbols)

H01M4/134; H01M4/13; H01M4/38; H01M4/48; H01M4/62; H01M10/0587; H01M50/107

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2008-108632 A (SANYO ELECTRIC CO., LTD.) 08 May 2008 (2008-05-08)<br>claims 1-2, paragraphs [0014], [0030]-[0050] | 1-6 |
| Y | WO 2022/070895 A1 (PANASONIC INTELLECTUAL PROPERTY MANAGEMENT CO., LTD.) 07 April 2022 (2022-04-07)<br>claim 8, examples, fig. 1 | 1-6 |
| Y | JP 2021-193660 A (DKS CO., LTD.) 23 December 2021 (2021-12-23)<br>examples | 1-6 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/019325**

| Patent document cited in search report | | | Publication date (day/month/year) | Patent family member(s) | | | Publication date (day/month/year) |
|---|---|---|---|---|---|---|---|
| JP | 2008-108632 | A | 08 May 2008 | (Family: none) | | | |
| WO | 2022/070895 | A1 | 07 April 2022 | US | 2023/0343942 | A1 | |
| | | | | claim 8, examples, fig. 1 | | | |
| | | | | EP | 4224565 | A1 | |
| | | | | CN | 116195089 | A | |
| JP | 2021-193660 | A | 23 December 2021 | WO | 2021/251084 | A1 | |
| | | | | examples | | | |
| | | | | TW | 202147673 | A | |

Form PCT/ISA/210 (patent family annex) (July 2022)

**EP 4 723 203 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019230296 A